# EUROPÄISCHE PATENTANMELDUNG

(11) **EP 3 217 628 A1**
(43) Veröffentlichungstag der Anmeldung: **13.09.2017**
(21) Anmeldenummer: 16159132.6
(22) Anmeldetag: 08.03.2016
(51) Int. Cl.: H04L 29/08, G06F 9/48

(54) **BETRIEBSVERFAHREN FÜR EINE CLIENT-SERVER-ARCHITEKTUR, VORRICHTUNG MIT EINER CLIENT-SERVER-ARCHITEKTUR UND COMPUTERPROGRAMMPRODUKT FÜR EIN BETRIEBSVERFAHREN FÜR EINE CLIENT-SERVER-ARCHITEKTUR**

(71) Anmelder: Siemens Aktiengesellschaft, 80333 München (DE)
(72) Erfinder: MICHELFELDER, Günter, 75334 Straubenhardt (DE)

(57) **Zusammenfassung**

Ein Betriebsverfahren, eine Vorrichtung und ein Programm für eine Client-Server-Architektur umfasst einen Server (2) und mehrere verteilt angeordnete Clients (6, 10), die über ein Netzwerk (4) miteinander verbunden sind. Der Server (2) stellt für die Clients (6, 10) Dienste (16, D1, D2, D3) zur Verfügung. Jedem der Dienste (16, D1, D2, D3) wird ein Kenner (P1, P2, P3) zugeordnet, der ein Prioritätsmaß für eine Abarbeitung des Dienstes (16, D1, D2, D3) bezeichnet. Der Server (2) erfasst laufend die Übertragungsleistung des Netzwerks (4) zwischen dem Server (2) und mindestens einem der Clients (6, 10). In Abhängigkeit des Kenners (P1, P2, P3) und der erfassten Übertragungsleistung wird ein von einem der Clients (6, 10) angeforderter Dienst (16, D1, D2, D3) abgearbeitet.

## Beschreibung

Die vorliegende Erfindung betrifft ein Betriebsverfahren für eine Client-Server-Architektur, eine Vorrichtung mit einer Client-Server-Architektur und ein Computerprogrammprodukt für ein Betriebsverfahren für eine Client-Server-Architektur, wobei die Client-Server-Architektur einen Server und mehrere, räumlich verteilt angeordnete Clients umfasst, die über ein Netzwerk miteinander verbunden sind, und wobei der Server für die Clients Dienste zur Verfügung stellt.

Eine Client-Server-Architektur bietet eine Möglichkeit, Aufgaben und Dienstleistungen innerhalb eines Netzwerkes zu verteilen. Die Aufgaben und Dienstleistungen werden von Programmen erledigt, die in Clients und Server unterteilt werden. Ein Client kann einen Dienst vom Server anfordern, er wird auch Dienstnehmer genannt. Der Server, der sich beispielsweise auf einem anderen Rechner im Netzwerk befindet, beantwortet die Anforderung. Der Server wird auch Dienstgeber genannt. Unter einem Dienst wird in der Netzwerktechnik die Vereinbarung einer festgelegten Aufgabe verstanden, die der Server anbietet und der Client nutzen kann. Üblicherweise kann ein Server gleichzeitig für mehrere Clients arbeiten.

Der Dienst stellt im Allgemeinen eine in sich geschlossene Funktionskomponente aus Anwendersicht dar. Diese Funktion kann technisch über eines oder auch mehrere Netzwerkprotokolle der Anwendungsschicht realisiert werden.

Die Bandbreite einer zwischen einem Client und einem Server erstellten Verbindung im Netzwerk ist ein Gradmesser für die maximal mögliche Geschwindigkeit, mit der man diese Verbindung nutzen kann.

Unterschiede in der Bandbreite einer Verbindung haben unter Anderem technische Ursachen wie Paketverluste, Jitter und weitere Ende-zu-Ende-Verzögerungen. Grundsätzlich gilt, je weiter ein Client oder Server von einer nächstgelegenen Vermittlungsstelle entfernt ist, desto niedriger ist die für ihn verfügbare Bandbreite. Auch die Qualität und Anzahl der Vermittlungsstellen innerhalb der genutzten Verbindung haben einen Einfluss auf die nutzbare Geschwindigkeit am Anschlussort des Clients oder Servers.

Eine reduzierte nutzbare Bandbreite einer Verbindung kann auch durch Überlastszenarien verursacht werden, z.B. wenn viele Anwender gleichzeitig über das Netzwerk kommunizieren.

Bei einer Client-Server-Lösung für eine Aufgabe kommen interaktive Anwenderfunktionen und Hintergrundprozesse zur Anwendung. Mit einer interaktiven Anwenderfunktion soll ein Programm oder eine Aufgabe bezeichnet werden, bei dem sich der Programmablauf oder die Bearbeitung der Aufgabe während der Laufzeit durch Anwendereingriffe oder Anwendereingaben beeinflussen lässt. Die Anwendereingabe erfolgt bei einer Client-Server-Lösung im Allgemeinen vom Client, während die Aufgabe dann abhängig von der Anwendereingabe vom Server weiter bearbeitet wird. Der Server kann im Laufe der Programm- oder Aufgabenbearbeitung Anforderungen für weitere Eingaben an den entsprechenden Client geben. Dagegen wird als Hintergrundprozess ein Prozess oder eine Abarbeitung einer Aufgabe bezeichnet, wobei mit dem Benutzer nicht direkt interagiert wird. Hintergrundprozesse laufen somit asynchron zu einer Benutzerschnittstelle.

Clients innerhalb von Netzwerken mit Client-Serverlösungen senden teilweise gleichzeitig Daten an die teilnehmenden Server. Dies geschieht ohne Berücksichtigung und unabhängig von der verfügbaren Bandbreite des verbindenden Netzwerks. Dies kann dazu führen, dass bei Überlastszenarien parallel laufende interaktive Funktionen nicht sinnvoll genutzt werden können oder dass Daten von gleichzeitig sendenden Hintergrundprozessen verloren gehen oder zu spät auf dem Server ankommen. Der Anwender oder Client kann bei solchen Lastszenarien auch nicht feststellen, ob und welche Restbandbreite ihm für interaktive Funktionen noch zur Verfügung steht.

Die Aufgabe der vorliegenden Erfindung besteht darin, ein Betriebsverfahren für die eingangs genannte Client-Server-Architektur derart weiterzubilden, dass bei einer temporär auftretenden reduzierten Übertragungskapazität des verbindenden Netzwerks die vorstehend erläuterten Nachteile vermieden werden und eine geordnete und kontrollierte Client-Server-Anwendung möglich ist.

Die Aufgabe der vorliegenden Erfindung besteht ebenfalls darin, die eingangs genannte Client-Server-Architektur derart weiterzubilden, dass bei einer temporär auftretenden reduzierten Übertragungskapazität des verbindenden Netzwerks die vorstehend erläuterten Nachteile vermieden werden und eine geordnete und kontrollierte Client-Server-Anwendung möglich ist.

Die Aufgabe der vorliegenden Erfindung besteht ebenfalls darin, ein entsprechendes Computerprogrammprodukt anzugeben.

Die erstgenannte Aufgabe wird durch ein Verfahren mit den Merkmalen des Anspruchs 1 gelöst. Danach umfasst das Betriebsverfahren für die eingangs angegebene Client-Server-Architektur die Schritte:
- jedem der Dienste wird ein Kenner zugeordnet, der ein Prioritätsmaß für eine Abarbeitung des Dienstes bezeichnet,
- der Server erfasst laufend die Übertragungsleistung des Netzwerks zwischen dem Server und mindestens einem Client, der einen Dienst vom Server angefordert hat,
- in Abhängigkeit des Kenners und der erfassten Übertragungsleistung Abarbeiten des von dem Client angeforderten Dienstes.

Vorteilhafte Ausgestaltungen des Verfahrens sind Gegenstand der abhängigen Ansprüche 2 bis 5.

Gemäß den Merkmalen des Anspruchs 2 zeichnet sich eine vorteilhafte Ausgestaltung des erfindungsgemäßen Betriebsverfahrens dadurch aus, dass Hintergrundprozessen, die zur Abarbeitung im Server ausgebildet sind, ebenfalls ein Kenner zugeordnet wird, der ein Prioritätsmaß für eine Abarbeitung des Hintergrundprozesses bezeichnet, und dass in Abhängigkeit des Kenners des Hintergrundprozesses und der erfassten Übertragungsleistung der von dem Client angeforderte Hintergrundprozess abgearbeitet wird.

Eine weitere vorteilhafte Ausgestaltung ist durch die Merkmale des Anspruchs 3 gegeben. Danach werden in Abhängigkeit der Übertragungsleistung des Netzwerks zwischen dem Server und einem der kommunizierenden Clients und des Kenners Dienste und/oder Hintergrundprozesse freigegeben oder gesperrt. Die Freigabe oder Sperre erfolgt entsprechend der Übertragungsleistung jeweils nur temporär.

Eine weitere vorteilhafte Ausgestaltung ist durch die Merkmale des Anspruchs 4 gegeben. Danach wird in Abhängigkeit der Übertragungsleistung des Netzwerks zwischen dem Server und einem der kommunizierenden Clients und des Kenners die Bandbreite des Datenflusses zwischen dem Server und dem kommunizierenden Client geändert. Die Änderung der Bandbreite des Datenflusses ist entsprechend der Übertragungsleistung nur temporär.

Gemäß den Merkmalen des Anspruchs 5 besteht eine vorteilhafte Ausgestaltung der Erfindung darin, dass die Übertragungsleistung aus einem Datenverkehr zwischen dem Server und einem der kommunizierenden Clients erfasst wird.

Die zweitgenannte Aufgabe wird durch eine Client-Server-Architektur mit den Merkmalen des Anspruchs 6 gelöst. Danach umfasst die eingangs genannte Client-Server-Architektur die Merkmale:
- den Diensten ist jeweils ein Kenner zugeordnet, der ein Prioritätsmaß für eine Abarbeitung des Dienstes bezeichnet,
- der Server umfasst ein Erfassungsmodul, das eine Übertragungsleistung des Netzwerks zwischen dem Server und mindestens einem Client erfasst, der einen Dienst vom Server angefordert hat, und
- der Server umfasst ein Freigabemodul, das in Abhängigkeit der Übertragungsleistung des Netzwerks zwischen dem Server und einem anforderndem Client und des Kenners den von dem kommunizierenden Client angeforderten Dienst abarbeitet.

Die Grundidee der erfindungsgemäßen Vorrichtung zur Lösung der obengenannten Aufgaben kann wie folgt zusammengefasst werden: Den vom Server angebotenen Diensten ist jeweils ein Kenner zugeordnet, der ein Prioritätsmaß für eine Abarbeitung des Dienstes bezeichnet. Der Server umfasst ein Erfassungsmodul, das eine Übertragungsleistung des Netzwerks zwischen dem Server und den mit dem Server kommunizierenden Clients erfasst. Des Weiteren umfasst der Server ein Freigabemodul, das in Abhängigkeit der Übertragungsleistung des Netzwerks zwischen dem Server und einem anforderndem Client und des Kenners den von dem kommunizierenden Client angeforderten Dienst abarbeitet.

So werden bei einer Client-Server-Anwendung abhängig von der Bandbreite oder der maximalen Datenübertragungsgeschwindigkeit auf dem benutzten Datenkanal im Netz Dienste, wie z.B. interaktive Funktionen, priorisiert zur Verfügung gestellt. Dazu ist eine Zuordnung oder eine Definition von Priorisierungsparametern für die relevanten Komponenten der Client-Server-Anwendung erforderlich. Zu den relevanten Komponenten innerhalb der Client-Server-Anwendungen zählen komplette Anwendungen oder Applikationen oder auch Funktionen innerhalb einer Applikation. Mittels des Erfassungsmoduls erfolgt laufend eine Erfassung der aktuellen Netzwerkbandbreite oder der tatsächlichen Übertragungsgeschwindigkeit innerhalb des Netzwerks zwischen den einzelnen Clients und den Servern. Das Freigabemodul ermittelt anhand der verfügbaren Bandbreite und der vergebenen Prioritäten für jeden einzelnen Client ständig, welche Applikationen und Funktionen innerhalb einer Anwendung oder Aufgabe zur selben Zeit parallel genutzt werden können. Das Freigabemodul arbeitet demnach ähnlich wie ein Prioritätsbroker.

Damit sind Funktionen oder Dienste mit hoher Priorität innerhalb von Client-Server-Lösungen in Netzwerken abhängig von der zugewiesenen Priorität auf Kosten von Diensten mit geringer Priorität auch bei geringer Bandbreite nutzbar ohne sich gegenseitig zu stören.

Vorteilhafte Ausgestaltungen der Client-Server-Architektur sind Gegenstand der abhängigen Ansprüche 7 bis 15.

Eine vorteilhafte Ausgestaltung der erfindungsgemäßen Client-Server-Architektur ist durch die Merkmale des Anspruchs 7 gekennzeichnet. Danach ist Hintergrundprozessen, die zur Abarbeitung im Server ausgebildet sind, ebenfalls ein Kenner zugeordnet, der ein Prioritätsmaß für eine Abarbeitung des Hintergrundprozesses bezeichnet. Das Freigabemodul bearbeitet in Abhängigkeit der Übertragungsleistung des Netzwerks zwischen dem Server und einem der den Hintergrundprozess kommunizierenden Clients und des Kenners den von dem kommunizierenden Client angeforderten Hintergrundprozess. So werden bei einer Client-Server-Anwendung zusätzlich Hintergrundprozesse, die einen Datenfluss zwischen Client und Server erzeugen, ohne mit dem Benutzer direkt zu agieren, entsprechend der augenblicklich verfügbaren Übertragungsleistung priorisiert abgearbeitet.

Gemäß Anspruch 8 ist eine vorteilhafte Ausgestaltung der Client-Server-Architektur dadurch gekennzeichnet, dass mindestens einer der Clients ein Benutzerinterface umfasst und dass das Benutzerinterface ausgebildet ist, gesperrte Dienste oder Hintergrundprozesse zu kennzeichnen oder nicht anzuzeigen. So können vom Server angebotene Funktionen oder Teilfunktionen im Benutzerinterface des kommunizierenden Client automatisch ausgeblendet werden, wenn nicht genug Bandbreite in der Netzverbindung zur Verfügung steht, sodass der Anwender weniger wichtige Funktionen oder Teilfunktionen auf dem Server nicht starten kann.

Dem Anwender kann bei interaktiven Funktionen, die aktuell aufgrund der zu geringen Bandbreite nicht nutzbar sind, vom Server eine Information, z.B. in Form eines Tooltips, zur Verfügung gestellt werden, warum die Funktionen ausgeblendet und nicht nutzbar sind.

Eine weitere vorteilhafte Ausgestaltung der Client-Server-Architektur ist durch die Merkmale des Anspruchs 9 gekennzeichnet. Danach ist das Freigabemodul ausgebildet, in Abhängigkeit der Übertragungsleistung des Netzwerks zwischen dem Server und einem der kommunizierenden Clients und des Kenners die Bandbreite des Datenflusses zwischen dem Server und dem kommunizierenden Client zu ändern. So erhalten bereits zwischen Client und Server laufende interaktive Funktionen eine geringere Bandbreite und werden dadurch eventuell verzögert ausgeführt, wenn höher priorisierte Funktionen, wie z.B. Hintergrundprozesse, gestartet werden. Eine Reduktion der Bandbreite bei interaktiven Funktionen erfolgt auch, wenn bereits gestartete höher priorisierte Funktionen, wie z.B. Hintergrundprozesse, mehr Bandbreite benötigen.

Gleichfalls erhalten bereits laufende Hintergrundprozesse eine geringere Bandbreite und werden dadurch eventuell verzögert ausgeführt, wenn Hintergrundprozesse mit höherer Priorität anstehen, die mehr Bandbreite benötigen.

Wenn nur Hintergrundprozesse anstehen, werden diese nach ihrer Priorität abgearbeitet.

Eine weitere vorteilhafte Ausgestaltung ist durch die Merkmale des Anspruchs 10 gegeben. Danach ist das Erfassungsmodul ausgebildet, die Übertragungsleistung mittels zusätzlicher Testsignale zu erfassen. Dies kann mittels eines Ping-Tests realisiert werden. Der dabei generierte Ping-Wert, der die Zeitspanne zwischen dem Aussenden eines Datenpaketes an einen Empfänger und des daraufhin unmittelbar zurückgeschickten Antwortpaketes angibt, kann als Maß der verfügbaren Bandbreite herangezogen werden. Je niedriger der Ping-Wert ist, desto höher ist die Übertragungsgeschwindigkeit oder die zur Verfügung stehende Bandbreite.

Eine weitere vorteilhafte Ausgestaltung ist durch die Merkmale des Anspruchs 11 gegeben. Diese Client-Server-Architektur ist dadurch gekennzeichnet, dass das Erfassungsmodul ausgebildet ist, die Übertragungsleistung aus einem ohnehin stattfindenden Datenverkehr zwischen dem Server und einem der kommunizierenden Clients zu erfassen. Hierbei wird im Zusammenhang mit der Bearbeitung des Dienste laufend die Zeitspanne zwischen einem Datenanforderungssignal vom Server und der Antwort des Clients darauf ausgewertet, ähnlich wie bei dem voranstehend schon genannten Ping-Test.

Eine besonders vorteilhafte Ausgestaltung ist durch die Merkmale des Anspruchs 14 gekennzeichnet. Danach ist ein erster Client einer rechnergesteuerten Maschine zugeordnet, ein zweiter Client ist einem für die rechnergesteuerte Maschine zuständigen Wartungszentrum zugeordnet und der erste und zweite Client sind über den Server als Kommunikationsplattform verbindbar.

Schließlich wird die Aufgabe durch ein Computerprogrammprodukt mit den Merkmalen des Anspruchs 16 gelöst.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: in einem Blockbild eine Client-Server-Architektur mit einer Priorisierung von angebotenen Diensten zur Wartung einer rechnergesteuerten Maschine,
- FIG 2: ein Funktionsdiagramm eines Freigabemoduls für eine gesteuerte Abarbeitung von Diensten in Abhängigkeit der Priorität und der zur Verfügung stehenden Netzbandbreite und
- FIG 3: eine Darstellung einer Benutzerschnittstelle.

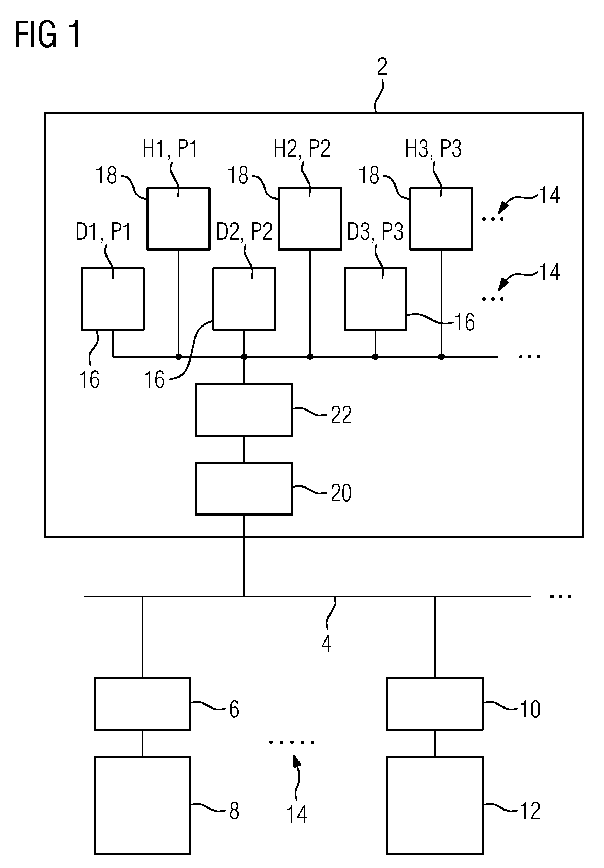

Das Blockschaltbild nach FIG 1 zeigt eine Client-Server-Architektur mit Diensten, die von einem Server 2 angeboten werden. Der Server 2 ist mit einem Datennetz 4 verbunden und kann über das Datennetz 4 einlaufende Aufgaben oder Anforderungen bearbeiten. Im vorliegenden Fall wird als Datennetz 4 das Internet benutzt. Der Server 2 kann jedoch auch mit einem Intranet oder mit einem anders aufgebauten Datennetz verbunden sein, bei dem Daten mittels festgelegter Protokolle zu angegebenen Empfängern übermittelt werden können.

Über einen ersten Client 6 ist eine rechnergesteuerte Maschine 8 mit dem Datennetz 4 verbunden. Die rechnergesteuerte Maschine 8 kann beispielsweise eine Produktionsmaschine oder eine rechnergesteuerte Werkzeugmaschine sein. Der erste Client 6 verwaltet Kommunikationsaufgaben mit der rechnergesteuerten Maschine 8 über das Datennetz 4.

Über einen zweiten Client 10 ist ein Wartungszentrum 12 mit dem Datennetz 4 verbunden. Das Wartungszentrum 12 übernimmt nach Art einer Fernwartung über das Datennetz 4 Wartungsaufgaben für rechnergesteuerte Maschinen an verschiedenen Standorten, vorliegend beispielhaft für die rechnergesteuerte Maschine 8. Über weitere Clients, hier nicht dargestellt und durch Punkte 14 symbolisiert, können im Allgemeinen weitere rechnergesteuerte Maschinen mit dem Datennetz 4 verbunden sein.

Der erste Client 6 und der zweite Client 10 sind bei der vorliegenden Architektur im Datennetz 4 für "normale" Nutzer nicht sichtbar. Nur von den Clients 6 und/oder 10 ausgehende Verbindungen zu dem Server 2 sind zugelassen. Die Clients 6 und 10 sind daher für die Allgemeinheit nicht öffentlich sichtbar. Sie können jedoch über den Server 2 miteinander kommunizieren, sofern sie am Server 2 angemeldet sind und von diesem auch zur Kommunikation autorisiert oder freigegeben und verbunden sind.

Ist vom Server 2 eine Kommunikationsverbindung zwischen dem ersten Client 6 und dem zweiten Client 10 hergestellt, kann der zweite Client 10 den Server 2 veranlassen, verschiedene Dienste 16 zur Kommunikation mit dem ersten Client 6 durchzuführen. In FIG 1 sind beispielhaft zur Erläuterung nur drei Dienste D1, D2, D3 angegeben, im Allgemeinen kann durch derartige Server 2 eine Vielzahl von Diensten 16 angeboten und ausgeführt werden, was durch Punkte 14 symbolisiert werden soll. Zum Beispiel kann das Wartungszentrum 12 über den Kommunikationsweg zweiter Client 10 - Server 2 - erster Client 6 Logfiles von der rechnergesteuerten Maschine 8 abrufen. Über denselben Kommunikationsweg können auch File-Transfers veranlasst oder eine Desktop-Steuerung aufgebaut werden. Ebenfalls kann auf diese Weise eine Simulation zum Maschinen- oder Programmtest auf der rechnergesteuerten Maschine 8 gestartet werden.

Die Dienste 16 können von dem anfordernden Client, zum Beispiel dem zweiten Client 10, Benutzereingaben erfordern. Oft sind diese interaktiv ausgestaltet, wobei nach jeder Eingabe eine von der Eingabe abhängige Teilfunktion gestartet wird.

Der Server 2 kann auch Hintergrundprozesse 18 abarbeiten, die mit dem Benutzer nicht direkt interagieren und damit asynchron zu einer Benutzerschnittstelle ablaufen. In FIG 1 sind beispielhaft zur Erläuterung drei Hintergrundprozesse H1, H2, H3 angegeben, im Allgemeinen kann durch derartige Server 2 eine Vielzahl von Hintergrundprozessen 18 angeboten und durchgeführt werden, was durch Punkte 14 symbolisiert werden soll.

Sowohl die Dienste 16 wie auch die Hintergrundprozesse 18 verursachen im Datennetz 4 Datenverkehr, der in Überlastfällen des Datennetzes 4 den Datentransfer empfindlich stören kann. So können bei Überlastfällen im Datennetz 4 interaktive Funktionen nicht sinnvoll genutzt werden. Es können auch Daten von gleichzeitig sendenden Hintergrundprozessen 18 durch Time-out verloren gehen oder zu spät auf dem Server 2 oder den Clients 6, 10 ankommen.

Um auch bei Überlastzuständen im Datennetz 4 noch eine geordnete Kommunikation und einen geordneten Datentransfer sicher stellen zu können, sind die vom Server 2 angebotenen Dienste 16 und Hintergrundprozesse 18 mit einem Kenner P1, P2, P3 markiert, der ein Prioritätsmaß für eine Abarbeitung des jeweiligen Dienstes 16 oder Hintergrundprozesses 18 bezeichnet.

Der Server 2 umfasst ein Erfassungsmodul 20, dass laufend eine Übertragungsleistung oder Übertragungskapazität eines Datenkanals im Datennetz 4 zwischen einem anfordernden Client, beispielsweise dem zweiten Client 10, und dem Server 2 erfasst. Dazu kann das Erfassungsmodul 20 in einer ersten Variante ausgebildet sein, die Übertragungsleistung mittels zusätzlicher Testsignale zu erfassen, beispielsweise über einen Ping-Test. In einer zweiten Variante kann das Erfassungsmodul 20 ausgebildet sein, die Übertragungsleistung aus dem ohnehin stattfindenden Datenverkehr zu erfassen. So kann beispielsweise aus der Antwortzeit, die aus jedem abgesendeten Datenpaket und dem zurücklaufenden Antwort-Datenpaket darauf ermittelt wird, ein Maß für die Übertragungsleistung abgeleitet werden. Dies wird auch als RTT (Round-trip-time) bezeichnet.

Des Weiteren umfasst der Server 2 ein Freigabemodul 22, dass in Abhängigkeit der Übertragungsleistung des Netzwerks 4 zwischen dem Server 2 und einem anfordernden Client und des Kenners P1, P2, P3 den von dem anfordernden Client angeforderten Dienst 16 oder Hintergrundprozess 18 abarbeitet. Die Funktion des Freigabemoduls 22 kann auch als Prioritätsbroker bezeichnet werden, wobei aus definierten Zuständen nach festgelegten Regeln anstehende Dienste, Aufgaben, Funktionen, Teilfunktionen ausgeführt werden.

Sowohl das Erfassungsmodul 20 wie auch das Freigabemodul 22 sind als Programmmodule realisiert und Teil des Servers 2.

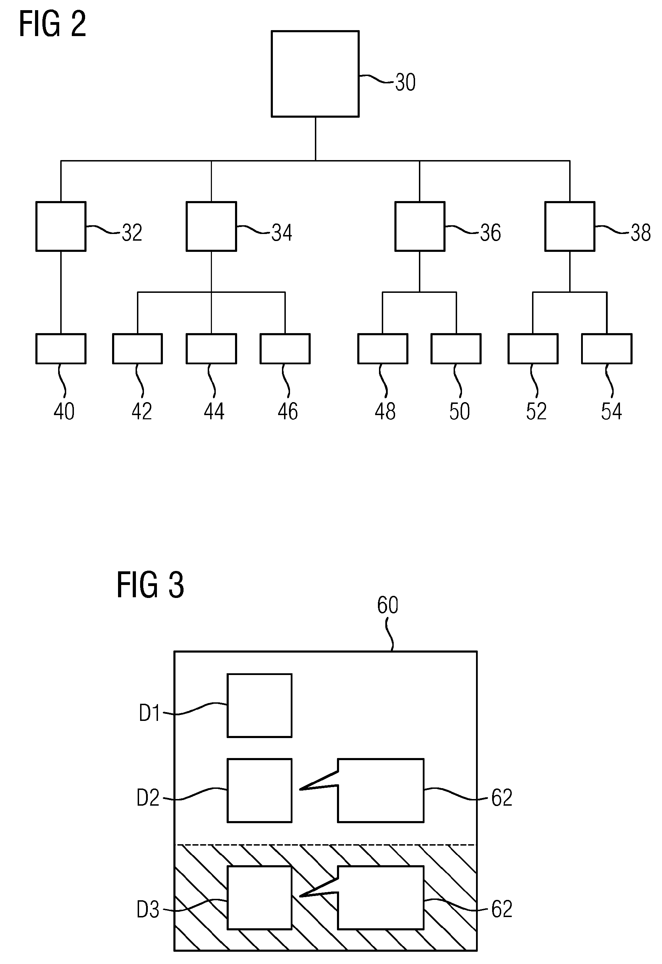

Die Steuerung und Aktivierung der angeforderten Dienste 16 und Hintergrundprozesse 18 im Server 2 in Abhängigkeit der Belastung des Datennetzes 4 wird im Folgenden anhand von FIG 2 beschrieben.

Die Zuordnung der Prioritäten P1, P2, P3 erfolgt durch den Anwender, Programmierer oder Inbetriebnehmer der Applikation nach der Wichtigkeit und Dringlichkeit des entsprechenden Dienstes 16 oder Hintergrundprozesses 18. Die Zuordnung der Prioritäten kann bei Bedarf oder geänderten Anforderungen von einem Bediener mit den entsprechenden Berechtigungen nachträglich noch angepasst und/oder optimiert werden. Die Prioritäten P1, P2, P3 sind dann mit den entsprechenden Diensten 16 oder Hintergrundprozessen 18 fest verknüpft.

Das Erfassungsmodul 20 erfasst laufend aus Antwortzeiten im Datenverkehr mit den Clients 6, 10 die Übertragungsleistung im Datenkanal zwischen Server 2 und Client 6, 10. Diese Erfassungsfunktion ist in FIG 2 durch das Bezugszeichen 30 gekennzeichnet. Die Übertragungsleistung ist beispielsweise in die Klassen "hoch" (Bezugszeichen 32), "mittel + (Bezugszeichen 34), "niedrig" (Bezugszeichen 36), "sehr niedrig" (Bezugszeichen 38) eingeteilt. Fällt die erfasste Übertragungsleistung im Datenkanal in eine dieser Klassen, werden entsprechend der Priorität der angeforderten Dienste 16 oder Hintergrundprozesse 18 die von den entsprechenden Diensten 16 oder Hintergrundprozessen 18 verursachten Datentransfer-Raten verringert.

Ist die Übertragungsleistung im Netz "hoch", werden alle Dienste 16 und Hintergrundprozesse 18 unabhängig von ihrer zugeordneten Priorität P1, P2, P3 abgearbeitet (erste Betriebsvariante, siehe Bezugszeichen 40).

Ist die Übertragungsleistung "mittel", wird der Datentransfer eines Teils der Dienste 16 und Hintergrundprozesse 18 reduziert. Beispielsweise werden Dienste 16 und Hintergrundprozesse 18 mit der Priorität P3 gesperrt (zweite Betriebsvariante, siehe Bezugszeichen 42), Dienste 16 und Hintergrundprozesse 18 mit mittlerer Priorität P2 werden in ihrer Bandbreite oder Datenrate, mit der sie auf das Netz arbeiten, reduziert (dritte Betriebsvariante, siehe Bezugszeichen 44), Dienste 16 und Hintergrundprozesse 18 mit hoher Priorität P1 werden unverändert weiter abgearbeitet (vierte Betriebsvariante, siehe Bezugszeichen 46).

Ist die Übertragungsleistung "niedrig", werden die Dienste 16 und Hintergrundprozesse 18 mit mittlerer Priorität P2 und niedriger Priorität P3 gesperrt (fünfte Betriebsvariante, siehe Bezugszeichen 48). Nur die Dienste 16 und Hintergrundprozesse 18 mit hoher Priorität P1 arbeiten verändert (sechste Betriebsvariante, siehe Bezugszeichen 50).

Ist die Übertragungsleistung "sehr niedrig", werden die Dienste 16 und Hintergrundprozesse 18 mit den Prioritäten P2 und P3 gesperrt (siebte Betriebsvariante, siehe Bezugszeichen 52) und Dienste 16 und Hintergrundprozesse 18 mit hoher Priorität P1 senden mit reduzierter Bandbreite ins Datennetz 4 (achte Betriebsvariante, siehe Bezugszeichen 54)

FIG 3 zeigt schematisch ein User-Interface 60 eines Clients 6, 10 bei einer mittleren Übertragungsleistung in dem Datenkanal zwischen dem anfordernden Client 6, 10 und dem Server 2. Der Dienste D1 mit der Priorität P1 wird dem Anwender ohne Einschränkung zur Verfügung gestellt. Der Dienst D2 mit der Priorität P2 wird dem Anwender mit einer reduzierten Datenrate zur Verfügung gestellt, dieser Dienst D2 arbeitet demnach für den Benutzer langsamer. Dieser Zustand wird dem Benutzer mit einem entsprechenden Tooltip 62 mitgeteilt. Dagegen ist auf dem User Interface 60 kenntlich gemacht, dass der Dienst D3 wegen eingeschränkter Übertragungsleistung des Netzes 4 nicht zur Verfügung steht, dies ist in FIG 3 durch eine Schraffur kenntlich gemacht. Zusätzlich wird dem Anwender dem Tooltip 62 der Grund mitgeteilt, warum dieser Dienst D3 zurzeit nicht zur Verfügung steht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Client-Server-Architektur mit einem Server (2) und mehreren verteilt angeordneten Clients (6, 10), die über ein Netzwerk (4) miteinander verbunden sind, wobei der Server (2) für die Clients Dienste (16, D1, D2, D3) zur Verfügung stellt, mit den Schritten:
- jedem der Dienste (16, D1, D2, D3) wird ein Kenner (P1, P2, P3) zugeordnet, der ein Prioritätsmaß für eine Abarbeitung des Dienstes (16, D1, D2, D3) bezeichnet,
- der Server (2) erfasst laufend die Übertragungsleistung des Netzwerks (4) zwischen dem Server (2) und den Clients (6, 10), die zur Bearbeitung mindestens eines angeforderten Dienstes (16, D1, D2, D3) mit dem Server (2) kommunizieren,
- in Abhängigkeit des Kenners (P1, P2, P3)und der erfassten Übertragungsleistung wird der von dem Client (6, 10) angeforderte Dienst (16, D1, D2, D3) abgearbeitet.

2. Betriebsverfahren nach Anspruch 1,
**dadurch gekennzeichnet, dass** Hintergrundprozessen (18, H1, H2, H3), die zur Abarbeitung im Server (2) ausgebildet sind, ebenfalls ein Kenner (P1, P2, P3) zugeordnet wird, der ein Prioritätsmaß für eine Abarbeitung des Hintergrundprozesses (18, H1, H2, H3)bezeichnet, und dass in Abhängigkeit des Kenners (P1, P2, P3) des Hintergrundprozesses (18, H1, H2, H3) und der erfassten Übertragungsleistung der von dem Client (6, 10) angeforderte Hintergrundprozess (18, H1, H2, H3) abgearbeitet wird.

3. Betriebsverfahren nach Anspruch 1 oder 2,
**dadurch gekennzeichnet, dass** in Abhängigkeit der Übertragungsleistung des Netzwerks (4) zwischen dem Server (2) und einem der kommunizierenden Clients (6, 10) und des Kenners (P1, P2, P3) Dienste (16, D1, D2, D3) und/oder Hintergrundprozesse (18, H1, H2, H3) freigegeben oder gesperrt werden.

4. Betriebsverfahren nach einem der vorstehenden Ansprüche,
**dadurch gekennzeichnet, dass** in Abhängigkeit der Übertragungsleistung des Netzwerks (4) zwischen dem Server (2) und den kommunizierenden Clients (6, 10) und des Kenners (P1, P2, P3) die Bandbreite des Datenflusses zwischen dem Server (2) und den kommunizierenden Clients (6, 10) geändert wird.

5. Betriebsverfahren nach einem der vorstehenden Ansprüche,
**dadurch gekennzeichnet, dass** die Übertragungsleistung aus einem Datenverkehr zwischen dem Server (2) und den kommunizierenden Clients (6, 10) erfasst wird.

6. Client-Server-Architektur mit einem Server (2) und mehreren, räumlich verteilt angeordneten Clients (6, 10), die über ein Netzwerk (4) miteinander verbunden sind, wobei der Server (2) für die Clients (6, 10) Dienste (16, D1, D2, D3) zur Verfügung stellt, **dadurch gekennzeichnet, dass** den Diensten (16, D1, D2, D3) jeweils ein Kenner (P1, P2, P3) zugeordnet ist, der ein Prioritätsmaß für eine Abarbeitung des Dienstes (16, D1, D2, D3) bezeichnet, dass der Server (2) ein Erfassungsmodul (20) umfasst, der eine Übertragungsleistung des Netzwerks (4) zwischen dem Server (2) und Clients (6, 10), die zur Bearbeitung mindestens eines angeforderten Dienstes (16, D1, D2, D3) mit dem Server (2) kommunizieren, erfasst und dass der Server (2) ein Freigabemodul (22) umfasst, das in Abhängigkeit der Übertragungsleistung des Netzwerks (4) zwischen dem Server (2) und den kommunizierenden Clients (6,10) und des Kenners (P1, P2, P3) den von dem anfordernden Client (2, 10) angeforderten Dienst (16, D1, D2, D3) abarbeitet.

7. Client-Server-Architektur nach Anspruch 6,
**dadurch gekennzeichnet, dass** Hintergrundprozessen (18, H1, H2, H3), die zur Abarbeitung im Server (2) ausgebildet sind, ebenfalls ein Kenner (P1, P2, P3) zugeordnet ist, der ein Prioritätsmaß für eine Abarbeitung des Hintergrundprozesses (18, H1, H2, H3) bezeichnet und dass das Freigabemodul (22) in Abhängigkeit der Übertragungsleistung des Netzwerks (4) zwischen dem Server (2) und einem der den Hintergrundprozess (18, H1, H2, H3) anfordernden Clients und des Kenners (P1, P2, P3) den von dem anfordernden Client (6, 10) angeforderten Hintergrundprozess (18, H1, H2, H3) abarbeitet.

8. Client-Server-Architektur nach Anspruch 6 oder 7,
**dadurch gekennzeichnet, dass** mindestens einer der Clients (6, 10) ein Benutzerinterface (60) umfasst und dass das Benutzerinterface (60) ausgebildet ist, gesperrte Dienste (16, D1, D2, D3) oder Hintergrundprozesse (18, H1, H2, H3) zu kennzeichnen oder nicht anzuzeigen.

9. Client-Server-Architektur nach Anspruch 6, 7 oder 8, **da durch gekennzeichnet**, dass das Freigabemodul (22) ausgebildet ist, in Abhängigkeit der Übertragungsleistung des Netzwerks (4) zwischen dem Server (2) und den kommunizierenden Clients (6, 10) und des Kenners (P1, P2, P3) die Bandbreite des Datenflusses zwischen dem Server (2) und den kommunizierenden Clients (6, 10) zu ändern.

10. Client-Server-Architektur nach einem der Ansprüche 6 bis 9, **dadurch gekennzeichnet, dass** das Erfassungsmodul (20) ausgebildet ist, die Übertragungsleistung mittels zusätzlicher Testsignale zu erfassen.

11. Client-Server-Architektur nach einem der Ansprüche 6 bis 9, **dadurch gekennzeichnet, dass** das Erfassungsmodul (20) ausgebildet ist, die Übertragungsleistung aus einem Datenverkehr zwischen dem Server (2) und den kommunizierenden Clients (6, 10) zu erfassen.

12. Client-Server-Architektur nach Anspruch 11,
**dadurch gekennzeichnet, dass** das Erfassungsmodul (20) ausgebildet ist, die Übertragungsleistung aus Antwortzeiten vom kommunizierenden Clients (6, 10) zu erfassen.

13. Client-Server-Architektur nach einem der Ansprüche 6 bis 12, **dadurch gekennzeichnet, dass** der Server (2) als Kommunikationsplattform für eingewählte Clients (6, 10) ausgebildet ist.

14. Client-Server-Architektur nach Anspruch 6 bis 13,
**dadurch gekennzeichnet, dass** ein erster Client (6) einer rechnergesteuerten Maschine (8) zugeordnet ist, dass ein zweiter Client (10) einem für die rechnergesteuerte Maschine (8) zuständigen Wartungszentrum (12) zugeordnet ist und dass der erste und zweite Client (6, 10) über den Server (2) als Kommunikationsplattform verbindbar sind.

15. Client-Server-Architektur nach Anspruch 6 bis 14,
**dadurch gekennzeichnet, dass** das Netzwerk (4) als Internet oder Intranet ausgebildet ist.

16. Computerprogrammprodukt mit einem Medium, das computerlesbaren Computer-Programm-Code enthält, wobei der Computer-Programm-Code, wenn er ausgeführt wird, einen Computer oder einen Prozessor veranlasst, die Schritte des Verfahrens nach einem der Ansprüche 1 bis 5 auszuführen.
